Europäisches Patentamt

European Patent Office

Office européen des brevets

(11) Veröffentlichungsnummer: **0 182 009**
**B1**

(12) **EUROPÄISCHE PATENTSCHRIFT**

(45) Veröffentlichungstag der Patentschrift:
08.11.89

(51) Int. Cl.⁴: **B 29 C 65/02** // B29K27:00,
B29L31:26

(21) Anmeldenummer: 85110135.2

(22) Anmeldetag: 13.08.85

(54) Verfahren zum Gehrungsschweissen von Profilen aus Kunststoff.

(30) Priorität: 16.11.84 DE 3441931

(43) Veröffentlichungstag der Anmeldung:
28.05.86 Patentblatt 86/22

(45) Bekanntmachung des Hinweises auf die Patenterteilung:
08.11.89 Patentblatt 89/45

(84) Benannte Vertragsstaaten:
AT BE CH FR GB IT LI LU NL SE

(56) Entgegenhaltungen:
DE-B- 2 316 749
FR-A- 962 092
US-A- 1 352 383
US-A- 2 178 528
US-A- 2 503 882
US-A- 2 794 221
US-A- 3 038 217

(73) Patentinhaber: REHAU AG + Co, Rheniumhaus,
D-8673 Rehau (DE)

(72) Erfinder: **Der Erfinder hat auf seine Nennung verzichtet**

ACTORUM AG

## Beschreibung

Die Erfindung betrifft ein Verfahren zum Gehrungsverschweissen von Profilen aus weich eingestelltem Kunststoffmaterial, insbesondere von Kühlmöbel-Dichtungsprofilen aus Polyvinylchlorid weich, wobei das einzelne Kunststoffprofil einen rechteckförmigen, in der Regel ein Magnetband tragenden Rohrquerschnitt und einen daran angelenkten Dichtungsbalg beliebigen Querschnitts aufweist, der mit seinen Balgwänden unter Bildung einer Hohlkammer an der Aussenwand des Deckschenkels eines Halteteils angeformt ist.

Eine derartige Dichtung ist aus der DE-AS 15 09 238 bekannt. Derartige Dichtungen werden auf Gehrung geschnitten und im Spiegel- oder anderen Schweissverfahren unter Zusammenpressen der Gehrungsecken zu Dichtungsrahmen verschweisst. Hierbei entstehen durch zusammenlaufendes Kunststoffmaterial in den Gehrungsecken unelastische bzw. in der Elastizität stark eingeschränkte Schweissecken, welche im Gegensatz zum anschliessenden Dichtungsprofil keine Atmungsmöglichkeiten beim Öffnen und Schliessen der Schranktüren besitzen. Es können demzufolge ungewollte Kältebrücken in den Eckbereichen entstehen, was auf die Wirtschaftlichkeit des Kühlmöbels negative Auswirkungen hat.

Aus der DE-PS 31 11 924 ist eine rahmenförmige Dichtung aus Kunststoff für die Türen eines Kühlmöbels bekannt geworden, welche ein Dichtungsprofil zeigt, bei dem die Schweisswulstbildung bei der Herstellung der Gehrungseckverschweissung von aussen und von innen beeinflusst werden kann. Dieser Vorteil wird dadurch erzielt, dass die Bewegungsmöglichkeit des Dichtungsprofils durch eine besonders ausgebildete Sollknickstelle ausserhalb des Dichtungsbalges angeordnet ist.

Derartige Profile lassen sich vorteilhaft dann zu Dichtungsrahmen gehrungseckverschweissen, wenn sich der innere Faltenbalg direkt an der Innentüre des Kühlmöbels abstützen kann. In anderen Fällen kann diese vorteilhafte Ausbildung des Querschnitts der Dichtprofile nicht eingesetzt werden.

Hier setzt die Erfindung ein, die es sich zur Aufgabe gestellt hat, ein Verfahren zum Gehrungseckverschweissen von Profilen aus weich eingestelltem Kunststoffmaterial wie Kühlschrank-Türdichtungsprofilen aus Polyvinylchlorid weich anzugeben, mit dem ein auch in den Eckbereichen atmungsfähiger Kühlmöbel-Türdichtungsrahmen erzielt werden kann, zu dessen Herstellung Profilformen verwendet werden, die ihre Bewegungsmöglichkeit durch die spezielle Ausbildung des Dichtungsbalges erhalten. Erfindungsgemäss wird dazu vorgeschlagen, dass der Deckschenkel des Halteteils vor Einleitung des Schweissvorganges im Bereich der Gehrungsecke zwischen den Balgwänden des Dichtungsbalges eckennah geöffnet wird, und dass danach im Durchgriff durch die hergestellte Öffnung und unter konturengleicher Abstützung der Gehrungsecke im Inneren des Dichtungsbalges die Verschweissung durchgeführt wird.

Mit dem erfindungsgemässen Verfahren kann erfolgreich verhindert werden, dass bei der Durchführung des Gehrungseckverschweissens durch Ansammlungen des Kunststoffmaterials im Schweissbereich eine nicht mehr beeinflussbare Verhärtung eintritt, die die geforderte Atmungsfähigkeit solcherart hergestellter Dichtungsrahmen auch im Bereich der Eckenausbildung negativ beeinflusst. Die konturengleiche Abstützung, die durch die Öffnung in den Dichtungsbalg eingreift, verhindert ein übermässiges Ansammeln des bei der Durchführung des Schweissvorganges im thermoplastischen Zustand befindlichen Kunststoffmaterials in den Eckbereichen des Dichtungsbalges.

Mit dem erfindungsgemässen Verfahren lässt sich der weitere Vorteil erzielen, dass nach Beendigung des Schweissverfahrens über die vorher hergestellte Öffnung im Gehrungseckbereich in das Innere des Dichtungsbalges eingegriffen werden kann, um eine Schweissnahtsäuberung durchzuführen. Auf diese Weise kann die innerhalb des Dichtungsbalges gelegene Schweissnaht genau so gesäubert werden, wie die aussenliegende Schweissnaht, die schon aus optischen Gründen gesäubert werden muss. Es kann also in der äusseren Ecke des gehrungseckverschweissten Kunststoff-Türdichtungsrahmens ein Wandquerschnitt erzielt werden, der weitgehend dem Wandquerschnitt des Dichtungsprofils in den nicht durch die Schweisseinwirkung beeinflussten Bereichen entspricht. Auf diese Weise lässt sich auch bei Dichtungsrahmen mit Querschnitten, die keine Spezialausbildung mit einer Verlegung von Sollknickstellen ausserhalb des Dichtungsbalges aufweisen, eine uneingeschränkte Atmungsfähigkeit in den Eckbereichen erzielen.

Vorteilhaft lässt sich die eckennahe Öffnung durch einen Schlitzvorgang erzeugen. Dieser Schlitzvorgang kann derart durchgeführt werden, dass die Profile nach dem Schneiden auf Gehrung mit einer Schere oder einer Spezialvorrichtung ausserhalb des Schweisswerkzeuges im Eckenbereich durch Einschneiden des Deckschenkels zwischen den Balgwänden des Dichtungsbalges geöffnet werden. Es besteht weiterhin die Möglichkeit, dass in das Schweisswerkzeug eine messerartige Schneide integriert ist, die beim Einschieben des Profils den Schnitt durch den Deckschenkel zwischen den beiden Balgwänden vornimmt.

Eine weitere Möglichkeit der erfindungsgemässen Öffnung des Deckschenkels zwischen den Balgwänden des Dichtungsbalges wird darin gesehen, dass diese Öffnung mit einem gesonderten Werkzeug in den auf Gehrung geschnittenen Profilen durch Ausklinken des Deckschenkels erfolgt. Dieses Ausklinken kann auch gleichzeitig mit der Herstellung des Gehrungsschnittes erfolgen. Der hier gewählte Begriff «Ausklinken» beinhaltet auch den technischen Vorgang des Ausstanzens.

Eine vorteilhafte Vorrichtung zur Durchführung des erfindungsgemässen Verfahrens kann aus einem mehrteiligen Werkzeug bestehen, welches die äusseren Konturen des zu verschweissenden Kunststoffprofils aufweist und in der Teilkontur eines Werkzeugteiles einen Haltesteg zum Einschieben in den offenen Profilbereich zwischen dem Deckschenkel und dem Halteschenkel des Halteteils aufweist. An diesen Haltesteg kann erfindungsgemäss ein in die eckennahe Öffnung des Deckschenkels einschiebbarer Führungssteg angeformt sein, welcher in seinen Abmessungen der inneren Kontur der Gehrungsecke des Kunststoffprofils oberhalb der eckennahen Öffnung entspricht.

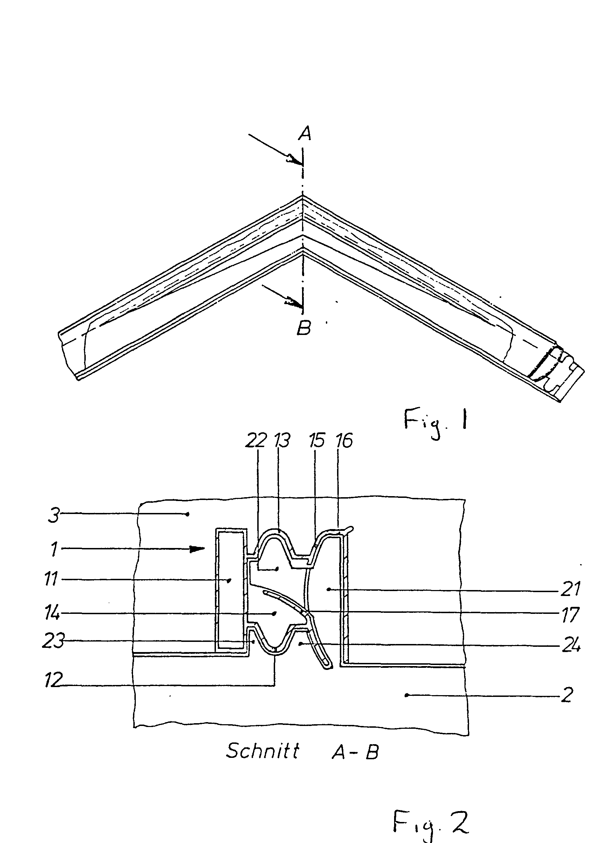

In der Zeichnung ist im Querschnitt ein Ausführungsbeispiel der erfindungsgemässen Vorrichtung schematisch dargestellt. An dieser Darstellung können auch die Einzelheiten des erfindungsgemässen Verfahrens erklärt werden. Die Darstellung zeigt einen Schnitt durch die Gehrungsecke eines Profils 1, welches zur Herstellung von Kühlmöbel-Türdichtungsrahmen verwendet wird. Das Profil 1 zeigt den Rohrquerschnitt 11, welcher im Einsatz das Magnetband (in der Zeichnung nicht gezeigt) trägt. Die Balgwände 12, 13, die den Dichtungsbalg 14 zusammen mit dem Deckschenkel 15 des Halteteils 16 begrenzen, sind in der gezeigten Darstellung als Sollknickstellen ausgebildet. Der Deckschenkel 15 ist erfindungsgemäss eckennah geöffnet, wobei der durch Schlitzen in einer Ebene gebildete Lappen 17 nach oben in den Innenraum des Dichtungsbalges 14 verschoben ist. Diese Stellung des Lappens 17 wird bewirkt durch den Führungssteg 22 des Teilwerkzeuges 2, welcher an dem Haltesteg 21 angeformt ist. Das Teilwerkzeug 2 besitzt im Bereich des Dichtungsprofiles 1 noch die den Konturen des Dichtungsprofiles 1 angepassten Stegteile 23, 24, welche in ihrer Verbindung die Anlageflächen für den Dichtungsbalg 14 des Dichtungsprofils 1 bilden. Die anderen Konturen des Dichtungsprofiles 1 sind umfasst von dem Teilwerkzeug 3, so dass es sich bei dem gezeigten Werkzeug 2, 3 um ein zweiteiliges Werkzeugsystem handelt. Im Bedarfsfall kann das Werkzeug auch mehrgeteilt sein.

Das erfindungsgemässe Verfahren wird wie folgt durchgeführt:

Nach Herstellung der Öffnung im Deckschenkel 15 wird das Teilwerkzeug 2 mit seinem Haltesteg 21 und seinem Führungssteg 22 in den offenen Profilbereich zwischen dem Deckschenkel und dem Halteschenkel des Dichtungsprofils eingeführt. Dabei wird der durch den Einschnitt im Deckschenkel 15 hergestellte Lappen 17 nach oben in den Dichtungsbalg 14 gestülpt. Der die innere Kontur des Dichtungsbalges 14 aufweisende Führungssteg stützt den Dichtungsbalg 14 und verhindert ein Einfallen während des Schweissvorganges an dieser Stelle. Nach dem Einführen des Teilwerkzeuges 2 auf die geschilderte Art und Weise wird das Teilwerkzeug 3 über das am Führungssteg 22 und dem Haltesteg 21 gehalterte Dichtungsprofil gebracht und der Schweissvorgang vollzogen. Nach Beendigung des Schweissvorganges erfolgt die umgekehrte Entfernung der Teilwerkzeuge 2 und 3. Die Kontur des Dichtungsbalges 14 ist durch die Führung des Führungssteges 22 erhalten geblieben. Eine evtl. zusätzliche Säuberung der inneren Schweissnaht ist durch die hergestellte Öffnung im Deckschenkel 15 nach der Entnahme der verschweissten Gehrungsecke aus den Teilwerkzeugen 2, 3 ohne weiteres möglich.

Bei einer Ausklinkung des Deckschenkels 15 im eckennahen Bereich wird der Deckschenkel 15 in einer Breite ausgestanzt, dass der Führungssteg 22 ohne weiteres durch die auf diese Weise entstandene Öffnung hindurchgeführt werden kann.

## Patentansprüche

1. Verfahren zum Gehrungsverschweissen von Profilen aus weich eingestelltem Kunststoffmaterial, insbesondere von Kühlmöbel-Dichtungsprofilen aus Polyvinylchlorid weich, wobei das einzelne Kunststoffprofil einen rechteckförmigen, in der Regel ein Magnetband tragenden Rohrquerschnitt und einen daran angelenkten Dichtungsbalg beliebigen Querschnitts aufweist, der mit seinen Balgwänden unter Bildung einer Hohlkammer an der Aussenwand des Deckschenkels eines Halteteils angeformt ist, dadurch gekennzeichnet, dass der Deckschenkel des Halteteils vor Einleitung des Schweissvorganges im Bereich der Gehrungsecke zwischen den Balgwänden des Dichtungsbalges eckennah geöffnet wird, und dass danach im Durchgriff durch die hergestellte Öffnung und unter konturengleicher Abstützung der Gehrungsecke im Inneren des Dichtungsbalges die Verschweissung durchgeführt wird.

2. Vorrichtung zur Durchführung des Verfahrens nach Anspruch 1, bestehend aus einem mehrteiligen Werkzeug, welches die äusseren Konturen des zu verschweissenden Kunststoffprofils aufweist und in der Teilkontur eines Werkzeugteiles einen Haltesteg zum Einschieben in den offenen Profilbereich zwischen dem Deckschenkel und dem Halteschenkel des Halteteils aufweist, dadurch gekennzeichnet, dass an den Haltesteg (21) ein in die eckennahe Öffnung des Deckschenkels (15) einschiebbarer Führungssteg (22) angeformt ist, welcher in seinen Abmessungen der inneren Kontur der Gehrungsecke des Dichtungsprofils (1) oberhalb der eckennahen Öffnung wenigstens im Bereich der Balgwand (13) entspricht.

## Revendications

1. Procédé de soudage d'onglet de profilés en matière plastique souple, notamment de profilés d'étanchéité pour réfrigérateurs ménagers en chlorure de polyvinyl plastifié, chaque profilé en matière plastique présentant une section transversale tubulaire rectangulaire, portant généralement une bande magnétique, et un soufflet d'étanchéité de section transversale quelconque y rattaché de façon articulée dont les parois, formant un espace creux, sont façonnées à partir de la paroi extérieure de la branche couvrante d'une pièce de maintien avec laquelle elles font corps, procédé caractérisé par le fait que la branche couvrante de la pièce de maintien est ouverte, avant le début de l'opération de soudage, dans le coin du biaisement, entre les parois du soufflet d'étanchéité, à proximité du coin d'angle et que le soudage est exécuté ensuite, en passant par l'ouverture pratiquée, l'angle du biaisement étant étayé en suivant les contours, à l'intérieur du soufflet d'étanchéité.

2. Dispositif d'application du procédé selon revendication 1, composé d'un outil à plusieurs pièces présentant des contours semblables aux contours extérieurs du profilé en matière plastique devant être soudé, un contour partiel de l'une des pièces de l'outil comportant un appui devant être introduit dans la zone ouverte du profilé, entre la branche couvrante et la branche d'appui de la pièce de maintien, caractérisé par le fait qu'un guide (22) insérable dans l'ouverture de la branche couvrante (15), située à proximité du coin du biaisement, est formé à partir de la pièce de maintien (21), guide dont les dimensions correspondent au contour intérieur de l'angle du biaisement du profilé d'étanchéité (1), au-dessus de l'ouverture pratiquée à proximité du coin d'angle, ceci au moins dans le secteur de la paroi du soufflet (13).

**Claims**

1. Process for mitre welding profiles of soft plastic materials, particularly refrigerator sealing profiles of soft polyvinyl chloride, whereby the individual plastic profile exhibits a rectangular, tubular cross-section which generally incorporates a magnetic strip, together with a bellows-type seal of random cross-section pivoted to it, the walls of which form a hollow chamber with the outer wall of the covering side of a attaching element, characterized in that the covering side of the attaching element is opened up in the area of the corner of the mitre between the walls of the bellows-type seal before the start of welding, and that the contours of the corner of the mitre are then supported from the inside of the bellows-type seal through the opening made and the weld is performed.

2. Device for performing the process in accordance with Claim 1, consisting of a multiple component tool exhibiting the overall contours of the plastic profile to be welded with a retaining web in the part-contour of one of the components of the tool which is pushed into the hollow area of the profile between the covering side and the attaching side of the attaching element, characterized in that a pilot web (22) which can be inserted into the opening in the covering side (15) near the corner is moulded onto the attaching web (21). The dimensions of this pilot web correspond to the inner contour of the mitre corner of the sealing profile (1) above the opening near the corner, at least in the vicinity of the wall (13) of the bellows-type seal.

1/1

Fig. 1

22 13 15 16

3

1

11

14

23

12

21

17

24

2

Schnitt  A - B

Fig. 2